Europäisches Patentamt

(19) European Patent Office

Office européen des brevets

(11) Publication number: **0 002 953**
**A2**

(12) # EUROPEAN PATENT APPLICATION

(21) Application number: 78300898.0

(51) Int. Cl.²: **B 29 D 3/02**, B 32 B 17/06

(22) Date of filing: 22.12.78

(30) Priority: 29.12.77 US 865567

(71) Applicant: **Rohm and Haas Company, Independence Mall West, Philadelphia, Pennsylvania 19105 (US)**

(43) Date of publication of application: **11.07.79 Bulletin 79/14**

(72) Inventor: **Russel, Larry Moore, 783 Spring Valley Road, Doylestown Pennsylvania 18901 (US)**

(74) Representative: **Angell, David Whilton et al, Rohm and Haas Company Patent Department Chesterfield House Barter Street, London WC1A 2TP (GB)**

(84) Designated Contracting States: **BE CH DE FR GB IT SE**

(54) **Fibre-reinforced plastics and their preparation.**

(57) In fibrous reinforced plastics comprising a layer of plastics material having bonded thereto fibrous reinforcement, the reinforcement may comprise a laminate of continuous strand glass fibre mat between chopped strand glass fibre mats, the continuous strand layer either containing microspheres or being substantially umcompressed. The plastics layer is preferably a preformed plastics sheet and may be reinforced by a modified vacuum bag moulding technique between a corresponding ingly shaped moulding area and preformed plastics membrane. Fibrous materials suitable for use in reinforcing plastics are also provided which comprise a fibrous mat, preferably glass fibre, having distributed therethrough microspheres bonded by thermoplastic polymer to the fibres or laminates of continuous strand glass fibre mat between chopped strand glass fibre mats, the continuous strand layer containing microspheres or being substantially uncompressed.

-1-

FIBRE-REINFORCED PLASTICS AND THEIR PREPARATION

This invention is concerned with fibre-reinforced plastics and their preparation and with fibrous materials suitable for use in reinforcing plastics.

Reinforced thermoset plastics and composite materials, such as glass fibre-reinforced polyesters, and a variety of methods for making them are known. Many of these known articles and methods are described in SPI Handbook of Technology and Engineering of Reinforced Plastics/Composites, 2nd Edition, Van Nostrand Rheinold Company, N.Y. 1973.

Various laminates or composites and their preparation are also disclosed in U.S. Patents Nos. 3,915,783, 3,567,568 and 3,867,221 and in British Patents Nos. 1,423,333 and 1,068,503.

In many applications materials are required which combine the basically contradictory properties of light weight and strength and also stiffness. Fibre-reinforced plastics strive to achieve an adequate balance of these properties and comprise fibrous material, in one or more layers, bonded to a layer of plastics material. The fibres, such as glass fibres, may provide strength but the reinforced material is often not stiff enough.

Sandwich constructions have been developed to try and achieve a desirable balance of properties by interposing a lightweight core between two structural skins. The outer layers, or skins, provide strength while the lightweight core, or inner layer, serves to reduce the overall weight of the laminate. Examples of such core materials include balsa wood, various polymers, paper and other lightweight rigid materials. However, these sandwich constructions tend to suffer from one or more drawbacks leading to poor mechanical properties or even failure. The bond between the outer layers and the core may be inadequate so that the material delaminates under load. The load sustained by an outer layer often cannot be efficiently transmitted to the opposite layer. Poor shear strength of most lightweight core materials causes failure at the centre line of the core where the highest shear stresses are encountered under impact and flexural loads. And poor compression strength of most lightweight core materials allows crushing under concentrated impact loads.

We have now found certain reinforced plastics which may provide an excellent balance of strength and stiffness while minimising weight.

According to the invention there is provided a reinforced plastics article which comprises a layer of plastics material having bonded to at least one surface thereof a laminate which comprises one or more fibrous mats having distributed therethrough microspheres bonded to the fibres by thermoplastic polymer, wherein the fibres comprise continuous strand glass fibres, said mat or mats being between mats comprising chopped strand glass fibres which are bonded together by thermoplastic polymer.

In a modification the invention also provides a reinforced plastics article which comprises a layer of plastics material having bonded to at least one surface thereof a laminate which comprises one or more mats of continuous strand glass fibres which are bonded together by cured thermosetting polymer, said mats being substantially uncompressed from their original thickness and being between mats comprising chopped strand glass fibres which are bonded together by thermoplastic polymer.

The invention also provides a process for preparing the above reinforced plastics.

Various cold moulding processes are known, that is processes in which the mould parts are not heated during operation.    These processes vary in complexity from
simple hand lay-up and spray-up methods to techniques which
require more sophisticated moulding methods and apparatus
such as the Marco method, vacuum bag moulding, cold press
moulding, resin injection moulding and vacuum injection
moulding.

Lay-up and spray-up techniques are relatively simple
in that much of the work is done by hand and the equipment
is inexpensive and uncomplicated.    A single mould is used
to shape the part and one side of the laminate is open to
atmosphere.    However, the quality of the products is often
poor in one or more respects and is dependent upon the skill
of the operator.    These methods are, in general, also time-
consuming and labour intensive.    In comparison, other of
the methods mentioned above are less dependent on the skill
of the operator and lend themselves to volume production.
They use pressure to distribute the resin and compact the
laminate and usually require matched moulds so that a cavity
defines the outer dimensions of the part.    However, these
also suffer from disadvantages in that bulky and often
expensive equipment is required.    Vacuum bag moulding is an
intermediate process in these respects which uses a plastics
membrane to compact the laminate by the use of atmospheric
pressure applied through the membrane by drawing air out
of the space between the mould and membrane.    The process
has advantages which include visual monitoring through the
membrane of complete saturation of the fibre reinforcement
by the resin and equipment which is not bulky, but the
membrane, or bag, has to be hand-sealed with a sticky sealant to the edges of the mould.    This is not only time
consuming but it is difficult or even impossible to remove
all the folds from the membrane with the result that it can
only be used once, due to the deposition of cured resin in
the folds, and the finished product requires sanding to
remove ridges left by the folds in the membrane.

We have now found a process which may alleviate these
difficulties while retaining the advantages of inexpensive
and simple equipment, minimised requirement for skilled personnel, volume production and good properties in the moulded part.

The process in this invention uses an apparatus comprising a base with an upper support thereon, which support has a flat or dished surface and at least one outlet, the surface but not the outlet optionally being bounded at least in part by gutter having at least one channel communicating with said outlet, the surface, outlet and, when present the gutter, being bounded by at least one seal, the plastics material being correspondingly shaped to said surface and gutter, when present, the process comprising the steps of:

   (a) applying the layer of plastics material to the support;

   (b) applying, to at least the flat or dished area of the plastics material, fibrous reinforcement comprising a laminate which comprises one or more fibrous mats having distributed therethrough microspheres bonded to the fibres by thermoplastic polymer, wherein the fibres comprise continuous strand glass fibres, said mat or mats being between mats comprising chopped strand glass fibres which are bonded together by thermoplastic polymer, said fibrous reinforcement being preformed or formed at least in part in situ on the plastics material;

   (c) applying a polymerizable resin to the fibrous reinforcement;

   (d) laying at least one plastics membrane, correspondingly shaped to the surface, over the support so as to overlap the seal;

   (e) drawing air from the outlet so as to form an at least partial vacuum between the membrane and the surface and to impregnate the reinforcement with the resin, and

   (f) polymerizing the resin, or allowing it to polymerize, the gutter in the plastics material, when present receiving any resin surplus to that required to impregnate the fibrous reinforcement.

In a modification of this process, the same apparatus is used and the process comprises the steps of

(a) applying the layer of plastics material to the support;

(b) applying, to at least the flat or dished area of the plastics material, fibrous reinforcement comprising one or more mats of continuous strand glass fibres which are bonded together by cured thermosetting polymer between mats comprising chopped strand glass fibres which are bonded together by thermoplastic polymer, said fibrous reinforcement being preformed or formed at least in part in situ on the plastics material;

(c) applying a polymerizable resin to the fibrous reinforcement;

(d) laying at least on plastics membrane, correspondingly shaped to the surface, over the support so as to overlap the seal;

(e) drawing air from the outlet so as to form an at least partial vacuum between the membrane and the surface and to impregnate the reinforcement with the resin;

(f) adjusting to vacuum so that the continuous strand mat or mats expand to substantially their original thickness, and

(g) curing the resin, or allowing it to cure, the gutter in the plastics material, when present, receiving any resin surplus to that required to impregnate the fibrous reinforcement.

One embodiment of the invention provides a fibrous mat having distributed therethrough microspheres bonded by thermoplastic polymer to the fibres.

The fibres may comprise nylon, carbon, boron, aramids woven fabrics or mixtures thereof but preferably comprise glass fibres, especially continuous strand glass fibres, for optimum suitability in the other aspects of this invention one of which, as described herein, is a laminate comprising one or more such microsphere-containing, continuous strand glass fibre mats between mats comprising chopped strand glass fibres which are bonded together by thermoplastic polymer.

The microspheres described herein may be glass, phenolic resin or thermoplastic polymer microspheres. They may be solid or hollow, but hollow is preferred to minimise their weight.

Preferably the laminates of this invention, described above alone and in combination with a layer of plastics material, consist of three layers, i.e. a central layer comprising the continuous strand glass fibres between outer layers comprising the chopped strand glass fibres. This sandwich construction provides the best balance of stiffness, strength and lightweight. Since the glass is a continuous phase from one skin to the other compression strength is improved as well as the shear strength of the core area so that higher impact loads can be sustained. Thus all the glass, including that on the side opposite from the impact side, is available to carry a share of the load and the glass layers may be entangled thereby preventing delamination.

The laminate of this invention in which the continuous strand layer is expanded allows easy control of the density of that layer and provides air voids interspersed throughout the layer adding thickness without sacrificing strength, stiffness and lightness.

The laminate containing the microspheres is a closed cell structure which does not permit moisture absorption. This is a valuable property in applications, such as boat hulls, which require lightness and strength but where the material may be exposed to water. Also the microspheres tend to support surrounding fibres thereby preventing buckling under localized impacts and improving shear strength and compression strength.

The fibrous mat containing the microspheres may be prepared by spreading a syntactic foam of microspheres dispersed in thermoplastic binder resin, for example polyester base resin, which is soluble in the liquid polymerizable thermosetting resin mixture, over the continuous strand glass fibre. This mat may be used to prepare the laminate described above by applying mats of chopped strand glass fibre to the microsphere mat. The resulting laminate may be preformed as described below or it may be prepared at the processing site just before use.

In a further aspect of this invention there is provided a process for preparing a fibrous laminate which comprises applying a liquid, thermosettable resin to one or more mats of continuous strand glass fibre, interposing said mat or mats between mats comprising chopped strand glass fibres which are bonded together by thermoplastic polymer, subjecting the laminate to an at least partial vacuum so as to impregnate the fibres with the resin, adjusting the vacuum so that the continuous strand mat or mats expand to substantially their original thickness and curing the resin or allowing it to cure.

By incorporating relatively high levels of thermoplastic polymer into the fibrous materials in this invention, such as about 10% by weight of the fibres, the materials may, if desired, be preformed into almost any desired shape. This is especially advantageous in reinforcing shaped plastics since it reduces the time needed to produce the reinforced article. The fibres may be heated in an oven which is set at a temperature high enough to soften the binder. The mat may then be positioned over a mould or holding fixture so that a pressure ring can be lowered onto, and restrict the motion of, the mat as it is forced into the cavity of the mould or holding fixture. The heated mat and pressure ring are then lowered into the cavity using minimum pressure so as to prevent stretching of the mat and bunching of its edges but, at the same time, using sufficient pressure to confer upon the mat the shape of the cavity.

Suitable thermoplastic and thermosetting binder polymers for the fibrous materials in this invention will be readily apparent to those skilled in the art. However, among those preferred may be mentioned conventional acrylic or polyester binders.  In relation to the polymerizable resin used in preparing the reinforced articles, the thermoplastic binders are soluble in that resin while the thermoset binder in the expanded construction is insoluble in that resin.

Some preferred embodiments of the invention will now be more particularly described in and by the accompanying drawings in which:

FIG 1 is a top view of an apparatus which may be used to prepare the materials of this invention;

FIG 2 is a cross-sectional view, in greater detail, taken on line 2-2 of FIG 1, this view showing the parts in their condition before vacuum is applied.

FIG 3 is a partial cross-sectional view, in greater detail, taken on line 2-2 of FIG 1, of certain parts of the assembly showing the condition of the parts (a) before vacuum is applied and (b) after vacuum is applied.

FIG 4 is a partial cross-sectional view of a different embodiment employing the expandable glass fibre construction taken on line 2-2 of FIG 1, of certain parts of the assembly showing the condition of the parts (a) before vacuum is applied, (b) after vacuum is applied, and (c) after vacuum is reduced.

FlG 5 is a partial cross-sectional view of another embodiment employing the microsphere-filled glass fibre construction taken on line 2-2 of FIG 1, of certain parts of the assembly showing the condition of the parts after vacuum is applied.

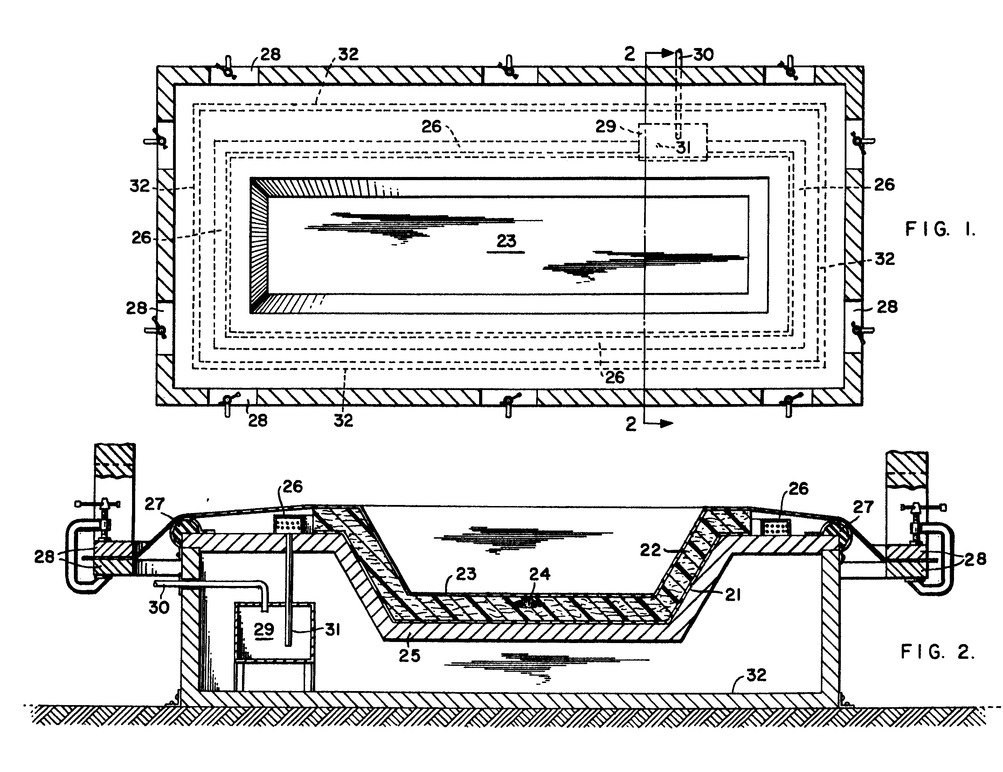

In FIG 1, a preformed plastic membrane 23 clamped in a frame 28 is shown mounted above a box support base 32 fitted with a resin trap system 29 and a connection 30 to a vacuum pump (not shown) associated with a vacuum port or outlet 31 and a strip of bleeder material 26.

By referring to FIG 2, the method of this invention can best be understood.  A holding fixture having a dished surface 25, made as described hereinbelow, is provided on base 32 and, further, is equipped with a rubber seal 27 about the peripheral edge of the fixture, a strip of bleeder material 26 within the circumference of the rubber fitting, and an outlet 31 connected to a resin trap 29 and, via connection 30 to a vacuum pump (not shown).

In the preferred process of the invention, after removing any loose particles from the holding fixture and the surface of a preformed plastics shell 21, the shell, correspondingly shaped to surface 25, is applied to the holding fixture.

Then, fibrous reinforcement 22 is applied to the surface of the plastics shell 21. As the fibrous reinforcement is most preferably the laminates described herein comprising an expandable glass fibre construction of continuous strand glass fibre mat containing cured thermosettable binder resin between mats of chopped strand glass fibre containing thermoplastic binder resin; or a glass fibre construction comprising continuous strand glass fibre mat containing lightweight microspheres and thermoplastic binder resin between mats of chopped strand glass fibre containing thermoplastic binder resin. Preferably the fibrous reinforcement is preformed as described above.

Next, liquid polymerizable resin mixture 24 is introduced to the fibrous reinforcement material 22 in sufficient quantity to saturate the reinforcement throughout.

Then, a preformed plastics membrane 23, clamped in a frame 28, is lowered over the assembly and applied to the surface of the resin mixture-containing reinforcement material. The membrane is sealed at the peripheral edge 27 of the holding fixture by means of applying moderate pressure or by using any known sealing agent applied to the rubber fitting 27, thereby providing a moulding system.

Vacuum is applied through the vacuum connection 30, the resin trap 29, the vacuum port or outlet 31, and the bleeder 26, whereby air is withdrawn from the moulding system ahead of the resin mixture which is drawn throughout the reinforcement material, and atmospheric pressure - approximately 68.5 cm of mercury - is brought to bear on the preformed plastic membrane thereby compacting the reinforcement material and aiding the saturation thereof with resin mixture.

Finally, when the reinforcement material is saturated throughout with resin mixture and while maintaining the moulding system under vacuum, the resin mixture is hardened. Provided that when the expandable laminate is being used the vacuum is relaxed before curing the resin to allow the continuous strand fibre layer to expand to the desired thickness. If desired, moderate heat, that is, heat which is sufficiently low to prevent an exotherm exceeding the heat distortion temperature of the plastic shell, may be applied to accelerate the cure of the resin mixture.

When the expandable glass fibre construction of the invention is employed as the fibrous reinforcement material, the vacuum may be reduced to about 10 cm of mercury when the fibres are saturated throughout with resin mixture, thereby allowing the centre layer or core of the laminate to expand from a compacted state, caused by the initial reduced pressure on the moulding system, to substantially its original expanded open network state.

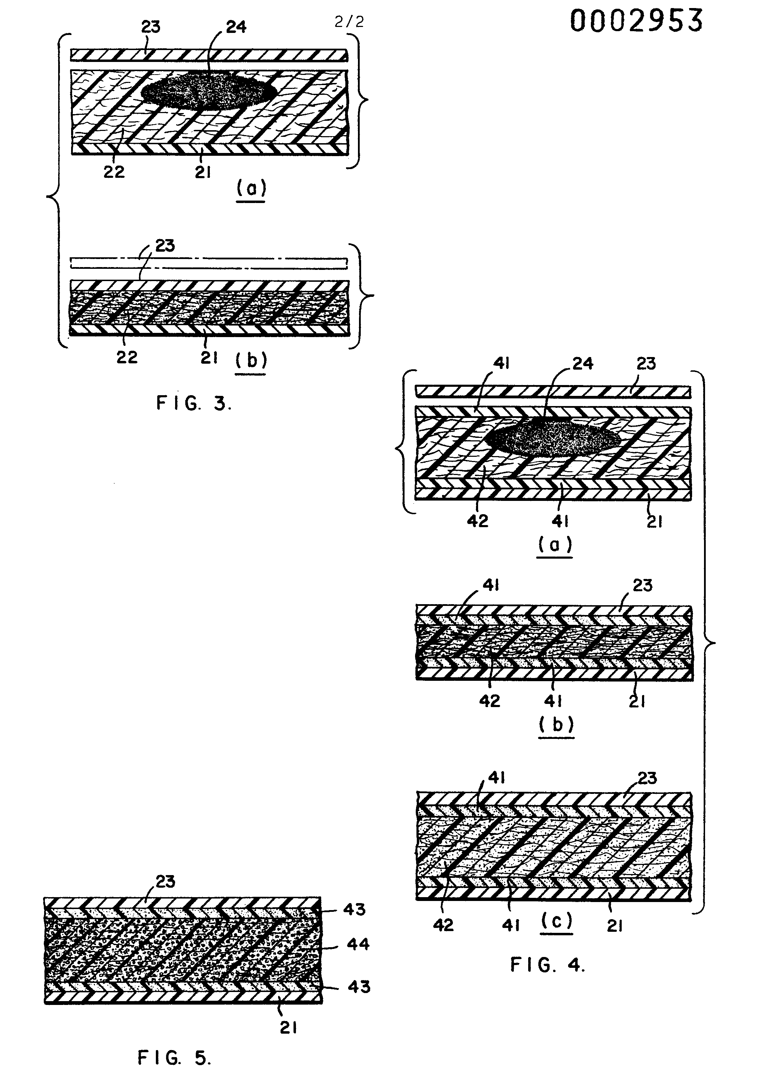

FIG 3, illustrates dispersion of the polymerizable resin and compaction of the reinforcement. A preformed plastic membrane 23 is mounted above a layer of fibrous reinforcement material 22 to which plastic resin mixture 24 has been introduced, the reinforcement material being applied to a preformed thermoplastic shell 21. FIG 3a shows the condition before vacuum is applied. In FIG 3b, the compacted condition of these same parts is shown after vacuum is applied and the resin mixture is distributed throughout the reinforcement material.

FIG 4a shows, before application of vacuum, a preformed plastic membrane 23 mounted above a laminate having an expandable glass fibre centre layer 42 of continuous strand glass fibre mat containing resin mixture 24 between two outer layers 41 of chopped strand glass fibre mat, the reinforcement material being applied to a preformed plastic shell 21. FIG 4b shows the compacted condition of these same parts after vacuum is applied and the resin mixture is distributed throughout the reinforcement material. FIG 4c shows the condition of these same parts after the vacuum
is reduced wherein the resin mixture-saturated centre
layer 42 of continuous strand glass fibre mat is expanded
from a compacted state to its original open network state.

FIG 5 shows, after application of vacuum, the compacted
condition of a preformed plastic membrane 23 mounted above
laminate of a microsphere-filled reinforcement material
having a centre layer 44 of continuous strand glass fibre
mat containing microspheres between two outer layers 43 of
chopped strand glass fibre mat, the reinforcement material
containing resin mixture distributed throughout and being
applied to a preformed plastic shell 21.

If desired the bleeder material 26 may be replaced by
a gutter in the surface of the support which bounds, at
least in part, the moulding surface of the apparatus.  Such
a gutter may be continuous or discontinuous and has at least
one channel communicating with at least one outlet for
connection to a vacuum pump via a resin trap.  Preferably
the gutter is continuous.  The plastics layer is correspondingly shaped to the moulding surface, gutter and
channel of the support.  On the plastics layer the gutter
and channel are located in a flash area which will be
subsequently trimmed from the finished product while the
gutter is provided to receive any resin excess to that
required to impregnate the fibrous reinforcement.  The
channel in the plastics sheet extends down at least a part
of the channel in the surface.  The channels may be located
either in a central or offset position with respect to a
length of one side of the apparatus.  The fibrous reinforcement is applied to the moulding area of the plastics
material and overlaps that area slightly, but so far as far
as to obscure the gutter.  Any surplus resin seeps into the
surrounding gutter in the plastics sheet where it can set
and be conveniently and cleanly disposed of when the gutter
is trimmed from the reinforced product.

While this invention embraces the production of both
flat and shaped articles, i.e. where the surface and
correspondingly the membrane is flat or dished, it is preferred that dished shapes are used. The flexibility of the membrane makes the apparatus particularly useful for reinforcing these shapes and even complex and sharply cornered ones such as undercuts. In the latter case it would be necessary for the support to have movable parts so that the undercut plastic layer could be held in place. This technique is known in the art. The membrane may be preshaped into any desired configuration by conventional thermoforming or vacuum forming techniques. For example, the membrane may be shaped by heating it, such as by infrared heat, and then quickly lowered over a suitably shaped surface so that it is sealed around the surface. Air is then removed from between the membrane and surface so that the membrane is drawn and shaped to the contour of the surface.

The membrane is most desirably transparent, for the reasons mentioned above. The material should be thermoformable, tough (so that it will not tear or puncture during handling), resistant to attack by the resin and self-releasing from the cured surface. Preferably the membrane is made from polyurethane, polyvinyl alcohol, nylon, a polyolefin, a polyolefin/polyester, polyvinyl chloride or silicone rubber.

The plastic membrane may be flat for use in making flat articles or, alternatively, it may be preformed into any desired configuration by thermoforming or vacuum forming techniques. The process of this invention is especially advantageous in making shaped articles wherein the plastic membrane has the same shape as that of the desired article. When it is desired to use thermoforming techniques, the same moulding equipment that is used to preform the thermoplastic shell may be used. On the other hand, when vacuum forming techniques are used to make the preformed plastic membrane, the holding fixture which is subsequently used in the method of the invention may be used. The plastic film is exposed to heat, for example, infrared heat, and the heated film is quickly lowered over the mould or holding fixture so that it seals itself to the peripheral edges thereof and vacuum is applied to remove air from the enclosed system so that the action of atmospheric pressure then conforms the film to the contours of the mould or holding fixture.

The membrane may be so flexible that, in use, it may tend to seal the gutter in the plastics layer and therefore impede the flow of air as it is withdrawn from the system. It is then desirable that means is used in the manner of a tent pole to prevent such sealing. The means should be sufficiently porous to allow passage of the air.

Because of the low pressures and temperatures involved in using the apparatus of the invention it may be constructed from light and inexpensive materials, such as glass fibre and plastics. The support may be made using, as a pattern, one of the preformed plastics shells prepared for use in the apparatus of the invention. The relatively thin plastics sheet may be supported if necessary and may be treated with a mould release agent. Glass fibre is then applied to the pattern and impregnated with polymerizable resin which is cured to make the support more substantial. The thickness of the support may be increased as desired by additional layers of glass fibre and resin. The edges of the support, so prepared, are then trimmed and attached to the base. Alternatively, a support may be used which is an integral part of the base. If desired, a vent may be provided between the shaped surface of the support and the atmosphere so that the reinforced plastics sheet can be removed easily from the support after the vacuum has been applied.

The seal around the edge of the support may be made from any suitable rubbery material such as neoprene. The seal may be attached to, adhered to or embedded in the apparatus. The seal may be made conveniently from split rubber hose and adhered directly to the edge of the apparatus, additional seals may be provided to prevent resin seeping under the plastics layer and corroding its lower, cosmetic surface. These seals may be located on or in the outer wall of the gutter, when used, and the adjacent surface of the support.

In use, the membrane may be held over the support and in contact with the peripheral seal by any suitable means, but it is preferred that the membrane is attached, such as by adhesive or tape, to a frame which is able to be fitted round the base. The frame fits slideably over the walls of the apparatus and rests on the rim thereof. The frame is preferably deep, so that it resists flexure in the vertical plane, but thin, so that it is able to flex in the horizontal plane. When the frame is in position and vacuum is applied tension in the membrane will then pull the frame against the peripheral seal and tend to lock it to the apparatus. The frame may, however, be mechanically attached to apparatus, particularly when the apparatus is large, such as by latches or clamps.

The plastics layer may be a preformed plastics shell or a gel coat. However, when a gel coat is used which is prepared by application directly to the surface of the support, that surface must be polished to provide an acceptably smooth and attractive surface on the final reinforced article. Since this involves more expensive tooling it is preferred that a plastics sheet is used as the plastics layer. Such a material has one or more of the following desirable characteristics: outdoor weatherability, impact resistance, capability of forming a chemical bond with the resin, ready availability in thin sheet form, attractive cosmetic qualities such as colour and texture, and ease of handling during processing.

The plastics sheet is preferably a thermoplastic polymer of at least one of: alkyl or aralkyl acrylates and/or methacrylates, vinyl chloride, acrylonitrile, methacrylonitrile, butadiene, styrene and substituted styrenes.

More preferably, the plastics sheet comprises a cured thermoplastic composition prepared from a monomer mixture comprising at least 50% by weight of at least one of alkyl acrylates, aralkyl acrylates, alkyl methacrylates, and aralkyl methacrylates. A sheet having this composition is also referred to as an acrylic sheet.

Most preferably, the plastics sheet comprises a cured thermoplastic composition prepared from a blend of (1) from 10% to 96% by weight of a rigid thermoplastic polymer comprising a homopolymer of a $(C_1 - C_4)$ alkyl methacrylate or a copolymer of at least 50% by weight of a $(C_1 - C_4)$ alkyl methacrylate and the balance, to total 100%, of at least one other copolymerizable monoethylenically unsaturated monomer; and (2) from 90% to 4% by weight of a multi-stage, sequentially-produced polymer characterized by:

    (a) a non-elastomeric, relatively hard first stage having a Tg greater than $25^{\circ}C$, polymerized from a monomer mixture comprising 70% to 100% by weight of at least one of the monomers specifically mentioned above for the rigid thermoplastic polymer, 0% to 10% by weight of a copolymerizable polyfunctional crosslinking monomer, and 0.05 to 5.0% by weight of a copolymerizable graftlinking monomer;

    (b) an intermediate elastomeric stage, polymerized in the presence of a product containing the first stage, from a monomer mixture comprising 50% to 99.9% by weight of a $(C_1 - C_8)$ alkyl acrylate or mixtures thereof, 0 to 49.9% by weight of a copolymerizable monoethylenically unsaturated monomer 0 to 5.0% by weight of a copolymerizable polyfunctional crosslinking monomer, and 0.05 to 5.0% by weight of a copolymerizable graftlinking monomer, the latter stage further characterized in that it would exhibit a Tg of $25^{\circ}C$ or less if the monomers were polymerized in the absence of the product containing the first stage; and

    (c) a final stage polymerized in the presence of a product containing said first and said intermediate stages from a monomer mixture comprising 70% to 100% by weight of at least one of the monomers specifically mentioned above for the rigid thermoplastic polymer, the final stage further characterized in that it would exhibit a Tg greater than $25^{\circ}C$ if the monomers were polymerized in the absence of the product containing the first and intermediate stages, said graftlinking monomer having two or more addition polymerizable unsaturated reactive groups which participate in the polymerization reaction at substantially different rates and said crosslinking monomer having a plurality of addition polymerizable unsaturated groups all of which participate in the polymerization reaction at about the same rate as one another.

The plastics sheet may be flat, to produce flat articles or, especially advantageously, the sheet may be thermoformed into any desired configuration for use in making articles having a particular configuration by the method of the invention. When the plastics layer comprises a gel coat, it is obtained and applied to a release agent-treated support by known methods.

Although the plastics layer in the product article may be of any desired thickness, it is preferably at least 0.076 cm thick, more preferably at least 0.1 cm thick.

When a thermoplastic sheet is used, it may be thermoformed to the desired configuration by known thermoforming techniques. Automatic or semi-automatic thermoforming equipment may be used so as to provide a thermoforming sequence which is fast enough to prevent premature cooling during the forming step and defects resulting therefrom, to provide greater consistency in the formed shells, to reduce labour costs, and to allow for larger-scale production. The heating source used may be any suitable heating oven or infrared heating device. The moulds used in thermoforming the thermoplastic sheet may be of cast aluminum or fibre glass/plastic composition. By using collapsible moulding devices, thermoplastic shells having undercut designs can be formed.

The liquid plastics resin which is employed in this invention is preferably characterized by the following properties: (1) low viscosity; (2) moisture resistance; and (3) favourable wetting properties. The resin may be a polymerizable thermosettable liquid which is sufficiently reactive so as to allow complete polymerization in thin coatings but not so reactive that it exotherms excessively and distorts the thermoplastic shell. Suitable resins include (a) a polymerizable liquid thermosettable resin such as a polyester/styrene, crosslinking acrylic, epoxy, urethane, phenolic, melamine or silicone resin mixture, and (b) a thermoplastic resin. When the resin is of class (a) above it further includes a polymerization catalyst to cure the resin. When the resin comprises a polyolefin such as, for example, molten polypropylene, hardening thereof is achieved by cooling to a temperature below the melting point of the resin. Thermoplastic resins such as polypropylene may be used for making articles having lower heat resistance than those prepared with thermosetting resins.

Preferably, the resin comprises a polyester/styrene or crosslinking acrylic resin. These resins do not undergo condensation reactions during polymerization and thereby permit low moulding pressures.

The acrylic resin preferably comprises at least 50% by weight of acrylic monomers, such as an alkyl or aralkyl ester of acrylic or methacrylic acid, and a crosslinking polyunsaturated monomer which is copolymerizable with the acrylic monomer such as alkylene diacrylates and dimethacrylates, and alkylene triacrylates and trimethacrylates, and polyvinyl aromatic compounds. Although polymerizable crosslinking acrylic resin mixtures have the advantages of being able to form chemical bonds with a great variety of thermoplastic materials and to polymerize in the presence of air and having suitably low viscosity, they suffer the disadvantage of being quite costly.

More preferably, the resin comprises a liquid polymerizable polyester/styrene mixture. As is known in the art, the polyester resin usually comprises the reaction product of at least one polymerizable ethylenically unsaturated polycarboxylic acid, such as maleic acid or its anhydride, and a polyhydric alcohol, such as propylene glycol and, optionally, one or more saturated polycarboxylic acids, such as phthalic acid or its anhydride. The resulting polyester base resin is then diluted with a liquid polymerizable monomer.

The polymerization of the thermosettable resin may be initiated by any of the means known in the art for generating free radicals. The polymerization catalyst system may be a self-curing catalyst/accelerator system comprising as the catalyst, a peroxide such as benzoyl peroxide or pentanedione peroxide, and as the accelerator, a tertiary amine such as dimethyl - or diethylaniline or a polyvalent metal - containing complex or salt such as cobalt naphthenate. Alternatively, a photosensitive initiator such as benzoin or a benzoin ether, which reacts under radiant energy applied through the transparent plastic membrane, such as ultra violet or infrared light waves, may be used in combination with a low temperature reactive peroxide such as peroxydicarbonate.

Fillers such as alumina trihydrate, can be used in this invention to increase the resin mixture volume, to reduce the amount of costly resin mixture required, and to impart fire resistance to the resulting article.

The reinforced plastics materials prepared by the method of the invention may be used in many applications. When the plastics layer is an acrylic sheet, particularly an impact-modified polymethacrylate, the plastics surface of the reinforced article is attractive, durable and tough. Examples of the uses of the reinforced materials include car bodies; panels and bodies in recreational vehicles, such as campers and caravans; boat hulls; in the construction of swimming pools and prefabricated structures, such as facing or roof panels and in containers for cargo handling, especially where foodstuffs are involved.

Some preferred embodiments of the invention will now be more particularly described in and by the following examples which are given for the purpose of illustration only. Example 5 is a comparative example not within the scope of this invention. In the examples the frontal, reverse and impact strengths are determined by the Falling Dart Test - an SPI Proposed Impact Test Method for Plastic Parts, January 1965.

Example 1

Three layers of continuous strand glass fibre are impregnated with an actuated viscous acrylic resin. This saturated material is then faced on either side by outer layers each of two layers of chopped strand glass fibre with soluble binder and applied to the flat surface of a holding fixture. The laminate is then covered by a clear plastic membrane. Air is then evacuated from the entire assembly forcing the laminate tightly against the surface and forcing resin from the core into the outer layers and saturating all the fibres.

Before gellation takes place, the vacuum is reduced so that the lower pressure on the membrane allows the springy core to force the compacted outer layers apart until the desired total laminate thickness is achieved. That pressure is then maintained until gel and cure of the acrylic resin takes place.

Example 2

A glass fibre reinforced article according to the invention is prepared by applying a 0.1 cm thick flat acrylic sheet to a holding fixture having a flat surface. Then a laminate is applied to the sheet which consists of a core of three layers of continuous strand glass fibre mat placed between two outer layers, each outer layer being two layers of chopped strand glass fibre mat. A sufficient amount of polymerizable liquid thermosettable polyester resin is introduced to the glass fibre reinforcement material such that resulting the resin mixture saturated reinforcement material comprises 42% by weight of glass and 58% by weight resin. A flat plastic membrane is then applied to the laminate and the resulting moulding system is subjected to an initial vacuum of about 63.5 cm of mercury until the fibres are saturated throughout with resin. Then the vacuum is reduced to about 7.6 cm of mercury, thereby allowing the core of continuous strand glass fibre layers to expand to the original expanded open network state while the chopped strand fibre glass mat layers remain compacted. The resin mixture is then allowed to completely cure. The resulting article has a thickness of 0.68 cm, a weight of 0.0674 kgm$^2$ (1.60 lbs/sq. ft.)., and Frontal and Reverse Impact Strengths of 94.9J (70 ft.-lbs.) and 27.1J (20 ft.-lbs.), respectively.

Example 3

Another glass fibre reinforced composite article according to the invention is prepared by applying a section of flat acrylic sheet 0.1 cm thick to a holding fixture having a flat surface. Then glass fibre reinforcement is applied to the surface of the acrylic sheet. This reinforcement material has a core of two layers of continuous strand glass fibre mat having evenly distributed over the surface thereof a syntactic foam consisting of polymerizable liquid thermosettable polyester resin containing 18 parts per hundred microspheres. This core is placed between two layers of dry chopped strand glass fibre mats, each layer comprising two layers of chopped mat. The amounts of glass and syntactic foam are selected such that the resulting syntactic foam saturated reinforcement material consists of about 25% by weight of glass and about 25% by weight syntactic foam. A flat plastic membrane is then applied to the surface of the foam saturated material thereby forming a moulding system which is subjected to a vacuum of about 63.5 cm of mercury until the glass fibre is saturated throughout. Then the resin system is allowed to completely cure. The resulting article has a thickness of 0.71 cm, a weight of 0.05 kgm$^2$ (1.18 lbs/sq. ft.), and Frontal and Reverse Impact Strengths of 84.1J (62 ft.-lbs.) and 67.8J (50 ft.-lbs.), respectively.

Example 4

A laminated glass fibre reinforced article according to the invention is prepared as described in Example 3 except that one of the outer layers of the glass fibre laminate is a single layer of chopped strand glass fibre mat applied to a surface of the core and a single layer of 24 ounce woven roving applied to the outer surface of the single layer of chopped mat. The glass fibre reinforcement is applied to the surface of the acrylic sheet such that the outer layer of the reinforcement comprising the two layers of chopped mat is contacted with the acrylic sheet. The resulting article has a thickness of 0.95 cm, a weight of 0.0527 kgm$^2$ (1.25 lbs/sq. ft.), and Frontal and Reverse Impact Strengths of 134J (99 ft.-lbs.) and 75.9J (56 ft.-lbs.) respectively.

Example 5

A comparative glass fibre reinforced article is prepared by applying to a holding fixture having a flat surface a section of flat 0.1 cm thick acrylic sheet. Then glass fibre reinforcement consisting of 9 layers of chopped strand glass fibre mat is applied to the surface of the sheet. Next, a sufficient amount of polymerizable liquid polyester resin mixture is introduced to the reinforcement such that the resin saturated reinforcement consists of about 50% by weight glass and about 50% by weight resin. Then a plastic membrane is applied to the surface of the saturated reinforcement to form a moulding system. The system is subjected to a vacuum of about 63.5 cm of mercury and the resin mixture is allowed to cure. The resulting article has a thickness of 0.79 cm, a weight of 0.0885 kgm$^2$ (2.10 lbs/ sq. ft), and Frontal and Reverse Impact Strengths of 122J (90 ft.-lbs.) and 61J (45 ft.-lbs.), respectively.

Claims:

1. A reinforced plastics article which comprises a layer of plastics material having bonded to at least one surface thereof a laminate which comprises one or more fibrous mats having distributed therethrough microspheres bonded to the fibres by thermoplastic polymer, wherein the fibres comprise continuous strand glass fibres, said mats being between mats comprising chopped strand glass fibres which are bonded together by thermoplastic polymer.

2. A reinforced plastics article as claimed in claim 1 wherein the microspheres are glass, phenolic resin or thermoplastic polymer microspheres.

3. A reinforced plastics article which comprises a layer of plastics material having bonded to at least one surface thereof a laminate which comprises one or more mats of continuous strand glass fibres which are bonded together by cured thermosetting polymer, said mats being substantially uncompressed from their original thickness and being between mats comprising chopped strand glass fibres which are bonded together by thermoplastic polymer.

4. A reinforced plastics article as claimed in any of claims 1 to 3 wherein the laminate consists of three layers: a central layer comprising the continuous strand glass fibres between layers comprising the chopped strand glass fibres.

5. A reinforced plastics article as claimed in any of claims 1 to 4 wherein the plastic layer comprises a gel coat or a plastics sheet.

6. A reinforced plastics article as claimed in claim 5 wherein the plastics sheet comprises a thermoplastic polymer of at least one of alkyl or aralkyl acrylates and/or methacrylates, vinyl chloride, acrylonitrile, methacrylonitrile, butadiene, styrene and substituted styrenes.

7.   A reinforced article as claimed in claim 6 wherein the plastics sheet comprises a cured thermoplastic composition prepared from a blend of (1) from 10% to 96% by weight of a rigid thermoplastic polymer comprising a homopolymer of a $(C_1- C_4)$ alkyl methacrylate or a copolymer of at least 50% by weight of a $(C_1 - C_4)$ alkyl methacrylate and the balance, to total 100% of at least one other copolymerizable monoethylenically unsaturated monomer; and (2) from 90% to 4% by weight of a multi-stage, sequentially-produced polymer characterized by:

    (a) a non-elastomeric, relatively hard first stage having a Tg greater than $25^{\circ}C$, polymerized from a monomer mixture comprising 70% to 100% by weight of at least one of the monomers specifically mentioned above for the rigid thermoplastic polymer, 0% to 10% by weight of a copolymerizable polyfunctional crosslinking monomer, and 0.05 to 5.0% by weight of a copolymerizable graftlinking monomer;

    (b) an intermediate elastomeric stage, polymerized in the presence of a product containing the first stage, from a monomer mixture comprising 50% to 99.9% by weight of a $(C_1 - C_8)$ alkyl acrylate or mixtures thereof, 0 to 49.9% by weight of a copolymerizable monoethylenically unsaturated monomer 0 to 5.0% by weight of a copolymerizable polyfunctional crosslinking monomer, and 0.05 to 5.0% by weight of a copolymerizable graftlinking monomer, the latter stage further characterized in that it would exhibit a Tg of $25^{\circ}C$ or less if the monomers were polymerized in the absence of the product containing the first stage; and

(c) a final stage polymerized in the presence of a product containing said first and said intermediate stages from a monomer mixture comprising 70% to 100% by weight of at least one of the monomers specifically mentioned above for the rigid thermoplastic polymer, the final stage further characterized in that it would exhibit a Tg greater than 25°C if the monomers were polymerized in the absence of the product containing the first and intermediate stages, said graftlinking monomer having two or more addition polymerizable unsaturated reactive groups which participate in the polymerization reaction at substantially different rates and said crosslinking monomer having a plurality of addition polymerizable unsaturated groups all of which participate in the polymerization reaction at about the same rate as one another.

8. A process for preparing a reinforced plastics article according to any of claims 1, 2 or 4 to 7 by means of an apparatus comprising a base with an upper support thereon, which support has a flat or dished surface and at least one outlet, the surface but not the outlet optionally being bounded at least in part by gutter having at least one channel communicating with said outlet, the surface, outlet and, when present, the gutter being bounded by at least one seal, the plastics material being correspondingly shaped to said surface and gutter, when present, the process comprising the steps of:

(a) applying the layer of plastics material to the support;

(b) applying, to at least the flat or dished area of the plastics material, fibrous reinforcement comprising a laminate as described in claim 1, 2 or 4, said fibrous reinforcement being preformed or formed at least in part in situ on the plastics material;

(c) applying a polymerizable resin to the fibrous reinforcement;

(d) laying at least one plastics membrane, correspondingly shaped to the surface, over the support so as to overlap the seal;

(e) drawing air from the outlet so as to form an at least partial vacuum between the membrane and the surface and to impregnate the reinforcement with the resin, and

(f) polymerizing the resin, or allowing it to polymerize, the gutter in the plastics material, when present, receiving any resin surplus to that required to impregnate the fibrous reinforcement.

9. A process for the preparation of a reinforced plastics article according to any of claims 3 to 7 by means of an apparatus comprising a base with an upper support thereon, which support has a flat or dished surface and at least one outlet, the surface optionally being bounded at least in part by gutter having at least one channel communicating with said outlet, the surface, outlet and, when present, the gutter being bounded by at least one seal, the plastics material being correspondingly shaped to said surface and gutter, when present, the process comprising the steps of:

(a) applying the layer of plastics material to the support;

(b) applying, to at least the flat or dished area of the plastics material, fibrous reinforcement comprising one or more mats of continuous strand glass fibres which are bonded together by cured thermosetting polymer between mats comprising chopped strand glass fibres which are bonded together by thermoplastic polymer, said fibrous reinforcement being preformed or formed at least in part in situ on the plastics material;

(c) applying a polymerizable resin to the fibrous reinforcement;

(d) laying at least one plastics membrane, correspondingly shaped to the surface, over the support so as to overlap the seal;

(e) drawing air from the outlet so as to form an at least partial vacuum between the membrane and the surface and to impregnate the reinforcement with the resin;

(f) adjusting the vacuum so that the continuous strand mats expand to substantially their original thickness; and

(g) curing the resin, or allowing it to cure, the gutter in the plastics material, when present, receiving any resin surplus to that required to impregnate the fibrous reinforcement.

10. A process as claimed in claim 8 or 9 wherein the flat or dished surface is surrounded by a continuous gutter.

11. A process as claimed in claim 8, 9 or 10 wherein the seal is located on or in the peripheral edge of the support.

12. A process as claimed in any of claims 8 to 11 wherein the membrane is attached to a frame which is able to be fitted around the base.

13. A process as claimed in any of claims 8 to 12 wherein the membrane comprises polyurethane, polyvinyl alcohol, nylon, polyolefin, polyolefin/polyester, polyvinyl chloride or silicone.

14. A process as claimed in any of claims 8 to 13 wherein the polymerizable resin comprises a polyester/styrene or crosslinking acrylic resin.

15. A fibrous mat having distributed therethrough microspheres bonded by thermoplastic polymer to the fibres.

16. A fibrous mat as claimed in claim 15 wherein the microspheres are glass, phenolic resin or thermoplastic polymer microspheres.

17. A fibrous mat as claimed in claim 15 or 16 wherein the fibres comprise glass fibres.

18. A laminate comprising one or more mats according to claim 17, wherein the fibres comprise continuous strand fibres, between mats comprising chopped strand glass fibres which are bonded together by thermoplastic polymer.

19. A laminate as claimed in claim 18 which consists of three layers: a central layer comprising the continuous strand glass fibres between outer layers comprising the chopped strand fibres.

20. A process for preparing a fibrous laminate which comprises applying a liquid, thermosettable resin to one or more mats of continuous strand glass fibre, interposing said mat or mats between mats comprising chopped strand glass fibres which are bonded together by thermoplastic polymer, subjecting the laminate to an at least partial vacuum so as to impregnate the fibres with the resin, adjusting the vacuum so that the continuous strand mat or mats expand to substantially their original thickness and curing the resin or allowing it to cure.

FIG. 1.

FIG. 2.

1/2

0002953

0002953

FIG. 3.

FIG. 4.

FIG. 5.